# EUROPEAN PATENT APPLICATION

(11) **EP 4 663 972 A1**
(43) Date of publication of application: **17.12.2025**
(21) Application number: 25172637.8
(22) Date of filing: 25.04.2025
(51) Int. Cl.: F16F 7/12, F16F 13/00, B61D 15/06, B61F 19/04, B61G 11/16

(54) **TUBULAR ENERGY ABSORBER HAVING BUFFER UNIT**

(30) Priority: 13.06.2024 KR 20240076680
(71) Applicant: Korea Railroad Research Institute, Uiwang-si, Gyeonggi-do 16105 (KR)
(72) Inventor: KIM, Jinsung, 13910 Gyeonggi-do (KR)
(74) Representative: Lewis Silkin LLP

(57) **Abstract**

An energy absorber includes an external unit, a collision unit and a buffer unit. The external unit extends with forming a stepped portion, and forms a predetermined inner space. The collision unit extends from the inner space to outside, and moves toward the inner space due to an external impact. The buffer unit is disposed in the inner space, and is connected to the collision unit to absorb the external impact. The external unit cuts or performs cutting and absorbs the external impact, as the collision unit moves.

## Description

This application claims priority under 35 U.S.C. § 119 to Korean Patent Application No. 10-2024-0076680, filed on June 13, 2024, the disclosure of which is incorporated by reference herein in its entirety.

### BACKGROUND

### 1. Field of Disclosure

The present disclosure of invention relates to an energy absorber, and more specifically the present disclosure of invention relates to an energy absorber having a tubular shape that absorbs impact or energy applied from the outside, and includes a buffer unit capable of absorbing a predetermined reversible impact depending on the impact or energy, and capable of improving the effect of impact or energy absorption by performing cutting.

### 2. Description of Related Technology

A number of technologies are being developed to maintain structural stability by absorbing external impacts applied to structures such as conventional railway vehicles.

For example, Korea Patent No. 10-1063942 discloses a technology for a structure that absorbs impact applied from the outside through cuts in the cuts by forming predetermined cuts at a certain interval in an impact absorbing device.

In addition, Korea Patent No. 10-0916598 discloses a technology for a structure in which a plurality of blades are formed along a circumference and, when an impact is applied from the outside, the blades are drawn in to absorb a certain amount of impact.

However, in the case of the above impact absorbing devices, there is a limitation in that effective impact absorption is limited due to unexpected destruction occurring when external impact exceeds a certain level. Accordingly, a technology for effectively absorbing external impacts by cutting the inner or outer surface of a parent material is disclosed in Korean Laid-open Patent No. 10-2022-0049684.

However, there is a need for design diversification that takes into accounts more effective impact absorption and various impact magnitudes, and thus there is a need for the development of an impact absorbing device that can absorb impacts stably and with high durability in a wider variety of impact providing environments.

### SUMMARY

The present invention is developed to solve the above-mentioned problems of the related arts.

The present invention provides an energy absorber having a tubular shape that absorbs impact or energy applied from the outside, and includes a buffer unit capable of absorbing a predetermined reversible impact depending on the impact or energy, and capable of improving the effect of impact or energy absorption by performing cutting.

According to an example embodiment, an energy absorber includes an external unit, a collision unit and a buffer unit. The external unit extends with forming a stepped portion, and forms a predetermined inner space. The collision unit extends from the inner space to outside, and moves toward the inner space due to an external impact. The buffer unit is disposed in the inner space, and is connected to the collision unit to absorb the external impact. The external unit cuts or performs cutting and absorbs the external impact, as the collision unit moves.

In an example, the buffer unit may include a buffer part configured to absorb the external impact, and a fixing portion configured to fix the buffer part to the external unit at an end of the buffer part.

In an example, the buffer part may be reversibly restored to an original state, when the impact within a predetermined range is applied.

In an example, the collision unit may include a collision surface to which the external impact is applied, a central frame extending between the collision surface and the buffer part, and a sub frame extending from the collision surface and extending toward the inner space along an inner surface of the external unit.

In an example, the energy absorber may further include a cutting unit extending with forming a stepped portion and combined with an outer portion of the external unit to cut the external unit, when the external unit is cut to absorb the external impact.

In an example, the cutting unit may include a cutting portion disposed on the outer portion of the external unit, and cutting the outer portion along a direction toward the collision unit, when the external impact is applied.

In an example, the cutting unit may include a horizontal frame sliding on the outer portion, and a vertical frame extending perpendicular to the outer portion from an end of the horizontal frame.

In an example, the horizontal frame may include a first horizontal frame extending with a first thickness, a second horizontal frame extending with a second thickness larger than the first thickness, and a slope frame extending with a slope between the first and second horizontal frames.

In an example, the external unit may include an end portion extending from the outer portion to be combined with the horizontal unit. The end portion may include a first end portion making close contact with the first horizontal frame, a second end portion making close contact with the second horizontal frame, and a slope portion making close contact with the slope frame.

In an example, the thickness of the first end portion may be larger than the thickness of the second end portion.

In an example, the energy absorber may further include a self-cut unit having a horizontal frame extending forming a stepped portion, and combined with the outer portion of the external unit to be cut by the external unit.

In an example, the external unit may include a cutting portion extending from an end portion located at an opposite end from a direction toward the collision unit. The cutting portion may cut an inner surface of the self-cut unit along a direction in which the external impact is provided, when the external impact is provided.

In an example, the horizontal frame may include a first horizontal frame extending with a first thickness, a second horizontal frame extending with a second thickness smaller than the first thickness, and a slope frame extending with a slope between the first and second horizontal frames.

In an example, the end portion may include a first end portion making close contact with the first horizontal frame, a second end portion making close contact with the second horizontal frame, and a slope portion making close contact with the slope frame.

According to the present example embodiments, in the case of conventional tubular energy absorbers, cutting is performed at the same time as impact is provided, so they have an irreversible structure that makes it difficult to absorb additional impact. However, in the present example embodiment, when an impact is applied from the outside, energy can be reversibly absorbed through the buffer unit up to a preset level, allowing repeated impact absorption.

In addition, even when the above reversible energy absorption range is exceeded, sufficient impact absorption is possible through cutting. In particular, since cutting is performed after primary absorption by the buffer unit even when a relatively large impact is provided, the cutting stroke may be relatively minimized. Accordingly, stable and effective impact absorption may be achieved even for relatively large impacts.

In this case, since a so-called stepped portion is formed between the outer surface of the external unit and the inner surface of the cutting unit, in the process in which the above cutting unit cuts the outer portion of the above external unit, in addition to impact absorption by cutting force, impact absorption by stepped portion is additionally performed. Thus, it may achieve effective and stable absorption even for larger impacts.

In addition, by combining a cutting unit to the outside of the external unit, external impact may be absorbed by cutting the cutting unit through the cutting portion of the external unit. This structure may be selected by considering the situation or environment in which the energy absorption device is applied.

Furthermore, in this case as well, the stepped portion is formed on the inner surface of the cutting unit and the outer surface of the external unit, so that additional impact absorption through the stepped portion may be implemented along with cutting force.

### BRIEF DESCRIPTION OF THE DRAWINGS

FIG. 1 is a cross-sectional view illustrating a tubular energy absorber according to an example embodiment of the present invention;
FIG. 2 is a cross-sectional view illustrating a reversible energy absorbing state when an external force is applied to the energy absorber of FIG. 1;
FIG. 3 is a cross-sectional view illustrating an energy absorbing state due to the cutting and the stepped portion when an external force is applied to the energy absorber of FIG. 1;
FIG. 4 is a cross-sectional view illustrating a tubular energy absorber according to another example embodiment of the present invention;
FIG. 5 is a cross-sectional view illustrating a reversible energy absorbing state when an external force is applied to the energy absorber of FIG. 4;
FIG. 6 is a cross-sectional view illustrating an energy absorbing state due to the cutting and the stepped portion when an external force is applied to the energy absorber of FIG. 4; and
FIG. 7A is a graph showing an absorbing load in a state of absorbing the energy through the cutting, and FIG. 7B is a graph showing an absorbing load in a state of absorbing the energy through the cutting and the stepped portion, i.e. axial conduit.

### DETAILED DESCRIPTION

The invention is described more fully hereinafter with Reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the invention is described more fully hereinafter with reference to the accompanying drawings, in which embodiments of the invention are shown.

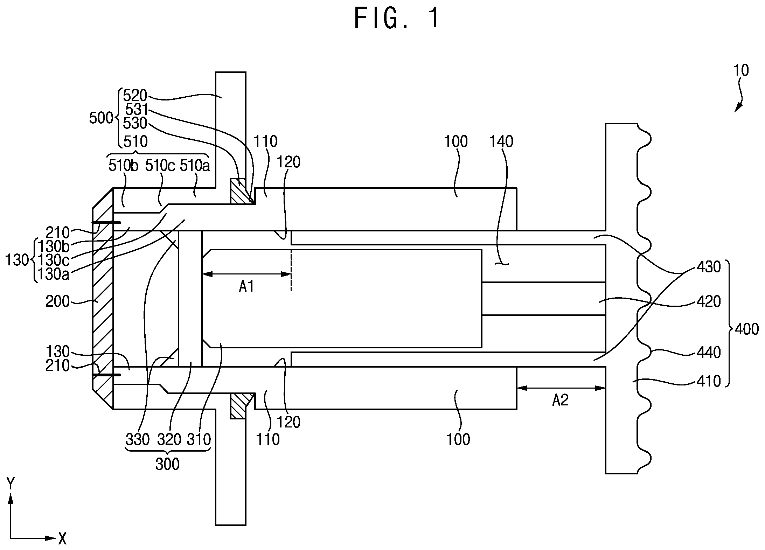

FIG. 1 is a cross-sectional view illustrating a tubular energy absorber according to an example embodiment of the present invention.

Referring to FIG. 1, the tubular energy absorber 10 (hereinafter, energy absorber) according to the present example embodiment includes an external unit 100, a cover unit 200, a buffer unit 300, a collision unit 400 and a cutting unit 500.

The energy absorber 10 may be applied to a structure such as a railway vehicle, for example, and effectively absorb impact provided from the outside to stably maintain the structure. However, it is obvious that the energy absorber 10 may be applied to various structures that require absorption of impact provided from the outside in addition to railway vehicles.

The external unit 100 has a hollow cylindrical shape in which a predetermined inner space 140 is formed and extends in a first direction X. In this case, the external unit 100 may be an open hollow cylindrical structure in which both sides facing the first direction X are open, and at this time, the width of the inner space 140 may be designed in various ways.

Here, the external unit 100 is not necessarily limited to having a cylindrical shape, and may have a shape such as a hollow square pillar with both sides open, for example. However, for convenience of explanation, the external unit 100 is described below as having a cylindrical shape.

The cover unit 200 is fixed to an end of the external unit 100 and may cover a side of the open cylindrical structure to seal it.

For example, if the external unit 100 has the cylindrical shape, the cover unit 200 may have a circular plate shape, and the diameter of the cover unit 200 may be formed to be somewhat larger than the diameter of the external unit 100.

Thus, as shown in FIG. 1, in the initial state, the cover unit 200 may be designed to cover not only the external unit 100 but also a side of a horizontal frame 510 of the cutting unit 500 described later.

The cover unit 200 is positioned at the end of the external unit 100 and is coupled and fixed to the external unit 100 through a connecting part 210. Here, the connecting part 210 may be any connecting unit that may secure the cover unit 200 and the external unit 100 to each other, and may be, for example, a fastening bolt.

Accordingly, the cover unit 200 and the external unit 100 are maintained in a state of being integrally connected to each other, and separation of the external unit 100 due to vibrations generated when a structure such as a railway vehicle moves or operates may be minimized.

The cover unit 200 is fixed on a structure such as a railroad vehicle, and the external unit 100 remains integrally coupled to the cover unit 200. Thus, when the energy absorber 10 having the external unit 100 is fixed to a structure such as a railway vehicle as a whole, separation due to external vibrations, etc. may be minimized.

The buffer unit 300 is positioned in the inner space 140 formed by the external unit 100, and includes a buffer part310, a fixing portion 320 and a sub unit 330.

The buffer part310, as illustrated in the figure, is positioned in the inner space 140, and has a predetermined volume.

Here, the size of the buffer part310 should be smaller than the extension length of the external unit 100 in the first direction X. In addition, the size of the buffer part310 should be formed to be smaller than the length (i.e., the radial diameter) of the inner space 140 in the second direction Y perpendicular to the first direction X.

The above buffer part310 is a structure that absorbs the impact when it is transmitted from the outside. If the external unit 100 has a hollow cylindrical shape, the buffer part310 may also have an overall cylindrical shape.

For example, the buffer part310 may include an impact-absorbing material and may have a cylindrical shape, and may also absorb external impact as a capsule structure with gas or liquid injected inside. Furthermore, the buffer part310 may have a viscoelastic (hydrostatic) structure, a rubber spring structure, or an elastic structure such as a spring that absorbs impact.

The buffer part310 is a structure capable of impact absorption as described above, and may reversibly absorb the impact when the external impact within a preset range is applied. That is, the buffer part310 contracts due to the external impact, and returns to its original state when the external impact is eliminated, so that reversible impact absorption may be repeatedly performed within a certain range.

However, if the external impact exceeding the above-mentioned preset range is applied, the reversible impact absorption is no longer possible, the impact is absorbed irreversibly, and even when the impact is eliminated, it does not return to the original state. In addition, when the external impact exceeding the range that the buffer part310 may absorb is applied, the impact absorption becomes possible through separate cutting, as described below.

The fixing portion 320 is positioned at the end of the buffer part310, and extends along the second direction Y to fix the buffer part310 to the external unit 100.

The fixing portion 320 may have a circular plate shape having a predetermined thickness. The fixing portion 320 is in full contact with the end of the buffer part310, and the outer surface of the fixing portion 320 is fixed along the inner surface 120 of the external unit 100.

Then, even though the external impact is applied to the buffer part310, the position of the buffer part310 is not changed due to the fixing portion 320 and merely absorbs the impact by contraction, etc. Further, even if the impact exceeding the range that the buffer part310 may absorb is provided, the buffer part310 is fixed integrally with the external unit 100 by the fixing portion 320, and thus, the external unit 100 also moves integrally according to the movement of the buffer part310.

The sub unit 330 is fixed to a rear end of the fixing portion 320, that is, to the side opposite to the direction toward the buffer part310, thereby further improving the supporting force of the fixing portion 320.

The sub unit 330 is a structure connected between the fixing portion 320 and the inner surface 120, and the coupling force between the fixing portion 320 and the inner surface 120 may be further improved through the sub unit 330. Accordingly, when the external impact is transmitted to the buffer part310, the fixing portion 320 may remain more stably coupled to the inner surface 120.

The collision unit 400 directly transmits the impact from the outside, and although not shown, is positioned to face or be connected to an impact generator or impact provider applied to a structure such as a railroad vehicle.

The collision unit 400 includes a collision surface 410, a central frame 420, a sub frame 430 and a collision protrusion 440.

The collision surface 410 is formed to have a predetermined area, and its shape may have various shapes such as a circle, polygon, or ellipse. In addition, although the drawing illustrates a plate shape having a predetermined area, it can be formed in various ways considering the occurrence of an external impact or the connection status with the impact provider.

The collision protrusion 440 protrudes in the direction in which the external impact is transmitted from the collision surface 410, and its spacing, shape, or arrangement may also be varied. The impact provided from the outside through the impact protrusion 440 may be provided relatively evenly to the collision surface 410, and the impact may be concentrated on a specific location of the collision surface 410 to minimize damage or deformation of the collision surface 410.

The central frame 420 is an extension frame connected between the buffer part310 and the collision surface 410, and may extend between the center of the other end of the buffer part310 and the center of the collision surface 410.

Thus, the external impact transmitted through the collision surface 410 is directly provided to the buffer part310 through the central frame 420.

The sub frame 430 is arranged on the outside of the central frame 420, and may be formed in multiple numbers as shown, or may have a hollow cylindrical structure that covers the central frame 420.

The sub frame 430 extends from the collision surface 410 toward the inner space 140 and may extend while contacting the inner surface 120 of the external unit 100.

That is, when the external impact is applied through the collision surface 410, the sub frame 430 slides and moves along the inner surface 120 due to the impact. In addition, through the sliding movement of the sub frame 430, the collision unit 400 as a whole is inserted into the inner space 140 of the external unit 100.

Meanwhile, in this case, the distance A1 between the fixing portion 320 and the end of the sub frame 430 is formed to be substantially the same as the distance A2 between the collision surface 410 and the other end of the external unit 100.

That is, when the collision unit 400 is inserted into the inner space 140 by the external impact, the length at which the collision unit 400 is inserted is formed to be the same as the length at which the sub frame 430 may move.

Accordingly, the problem of the sub frame 430 coming into contact with the fixing portion 320 and applying the impact due to excessive insertion of the collision unit 400 may be prevented. Furthermore, even if the applied impact exceeds the impact absorption range of the buffer part310, the impact may be dispersed through cutting described below, thereby preventing damage to the buffer part310.

The above two distances A1 and A2 may be maintained the same at all times, of course, in the initial state when no external impact is applied, and even when the external impact is applied and the buffer part310 contracts, as described later.

The cutting unit 500 performs cutting on the external unit 100 to absorb the external impact when the external impact exceeds a predetermined range, i.e., the reversible absorption range of the buffer unit 310.

Of course, the cutting unit 500 is not necessarily limited to performing cutting on the external unit 100 only when the impact exceeds the reversible absorption range of the buffer part310. Even when the impact is provided within the above reversible absorption range, cutting may be performed on the external unit 100 in situations such as when the impact is applied for a short moment.

The cutting unit 500 includes a horizontal frame 510, a vertical frame 520 and a cutting portion 530.

The horizontal frame 510 extends along the outer portion 110 of the external unit 100. Since the external unit 100 has a cylindrical shape, the horizontal frame 510 may also have a structure with a hollow cylindrical shape.

In this case, the horizontal frame 510 may extend only from the end portion 130 of the external unit 100 to which the cover unit 200 is coupled to a position that partially overlaps the buffer part310. That is, the horizontal frame 510 does not cover the entire length of the external unit 100, and this is to pre-form an area greater than a predetermined length as a cutting area, since the cutting unit 500 must perform cutting on the external unit 100 through sliding movement.

The outer portion 110 of the external unit 100 extends in the first direction X and extends to the end portion 130 at the part where the cutting unit 500 is coupled.

As illustrated, the end portion 130 extends in the first direction X and does not have the same thickness, but extends to form a stepped portion with variable thickness.

The end portion 130 includes a first end portion 130a extending from the outer portion 110, a slope portion 130c extending in an inclined manner from the first end portion 130a, and a second end portion 130b further extending in the first direction X from the slope portion 130c.

Here, the first end portion 130a may have a first thickness, and the second end portion 130b may have a second thickness smaller than the first thickness. Accordingly, the end portion 130 extends from the outer portion 110 in the negative first direction -X while forming the stepped portion whose thickness decreases.

In addition, as illustrated, the slope portion 130c forms an inclined portion whose thickness gradually decreases as it extends in the negative first direction -X.

As described above, as the end portion 130 extends and includes the stepped portion forming a predetermined slope, the horizontal frame 510 that is coupled, i.e., adhered to the outer surface of the end portion 130 also extends and includes the stepped portion forming a slope.

The horizontal frame 510 includes a first horizontal frame 510a coupled along the outer surface of the first end portion 130a, a second horizontal frame 510b coupled along the outer surface of the second end portion 130b, and a slope frame 510c coupled along the outer surface of the slope portion 130c.

Here, the thickness of the first horizontal frame 510a may be smaller than the thickness of the second horizontal frame 510b.

Thus, the horizontal frame 510 has a structure in which the inner surface extends to form a so-called stepped portion.

As described above, as the horizontal frame 510 and the end portion 130 are extended and joined with a predetermined step, additional impact absorption may be implemented in the slope portion 130c and the slope frame 510c when the impact is applied from the outside as described below.

The vertical frame 520 is a structure that extends from the end of the horizontal frame 510 toward the second direction Y. In the case of the vertical frame 520, it may have a circular plate structure with a predetermined thickness and an open center.

The cutting portion 530 is connected to the portion where the horizontal frame 510 and the vertical frame 520 are connected, and is directed toward the outer portion 110 of the external unit 100 so as to come into contact with the outer portion 110.

At this time, the cutting portion 530 performs cutting on the outer portion 110, and in order to perform impact absorption through this cutting, the cutting portion 530 is positioned so as to have a predetermined depth of cut in the outer portion 110.

Furthermore, since the cutting portion 530 is positioned so as to have a cutting thickness as described above, the horizontal frame 510 may also be inserted into the outer portion 110 and extended by the cutting thickness.

The cutting portion 530 may have a cutting tip portion 531 formed at a portion that comes into contact with the outer portion 110 to perform cutting on the outer portion 110. Accordingly, when the external impact is applied and the outer portion 110 moves toward the cutting portion 530, the cutting portion 530 performs cutting processing on the outer portion 110 through the cutting tip portion 531. Thus, during this cutting process, the external impact is naturally absorbed.

In the present example embodiment, the cutting portion 530 is coupled to the horizontal frame 510 and the vertical frame 530 so as to be replaceable, so that when the cutting portion 530, particularly the cutting tip portion 531, is worn or damaged, the cutting portion 530 may be replaced.

In addition, the cutting degree may be designed in various ways by considering the size of the external force provided by the energy absorber 10, the material properties of the external unit 100, i.e., the cutting material, and the capacity of the buffer part310. Thus, the cutting portion that matches the designed cutting degree may be replaced and mounted.

Below, the impact absorption state of the energy absorber 10 when the external impact, i.e. the external force, is applied will be described.

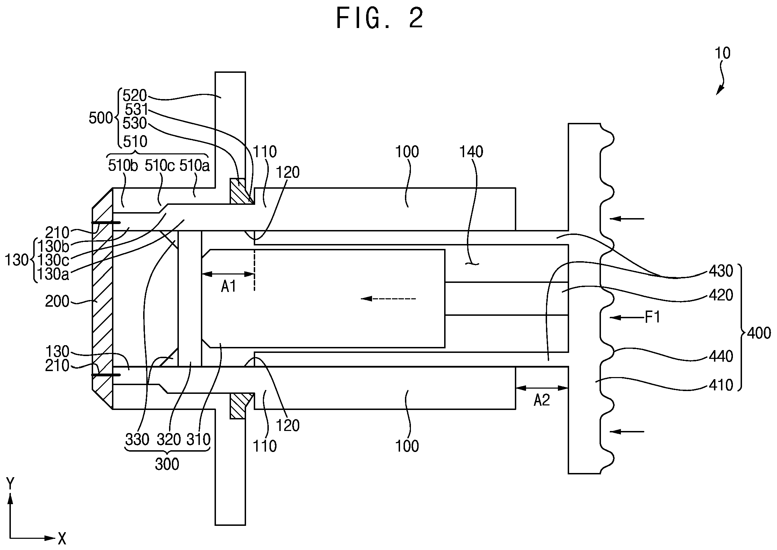

FIG. 2 is a cross-sectional view illustrating a reversible energy absorbing state when an external force is applied to the energy absorber of FIG. 1.

Referring to FIG. 1, as the external force F is provided, the collision unit 400 moves along the direction in which the external force is provided, and thus the collision unit 400 is inserted into the inner space 140 of the external unit 100 by a predetermined stroke.

Here, as described above, the distance A1 between the end of the fixing portion 320 and the sub frame 430 is maintained substantially equal to the distance A2 between the collision surface 410 and the other end of the external unit 100.

As described above, when the collision unit 400 is inserted while sliding, the buffer part310 receives the external force through the sub frame 430 and is compressed or contracted to an amount corresponding to the size of the external force F1.

The buffer part310 is compressed or contracted to a degree corresponding to the size of the external force F1 and absorbs the external force.

In this external force absorption state of the buffer part310, the external unit 100 and the cutting unit 500 do not move relatively, and therefore, impact absorption through separate cutting may not occur. Of course, as explained above, even when the external force within the impact absorption range of the buffer part310 is applied due to a situation such as a momentary application of the external force, cutting by the cutting unit 500 may be performed.

Furthermore, the buffer part310 in FIG. 2 is capable of reversible operation, and when the external force F1 disappears, the buffer part310 that was contracted or compressed expands and returns to the initial state.

As described above, the buffer part310 may be reversibly driven against a certain range of external force, so that when the external force occurs, it absorbs the force and when the external force disappears, it returns to the initial state. Thus, it may perform repeated and effective impact absorption against repeated external forces.

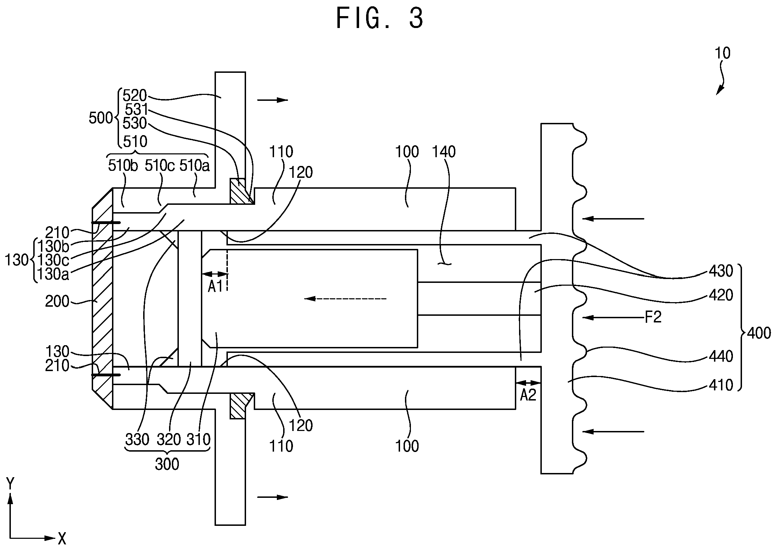

FIG. 3 is a cross-sectional view illustrating an energy absorbing state due to the cutting and the stepped portion when an external force is applied to the energy absorber of FIG. 1.

In FIG. 3, an energy absorption state is illustrated when the external impact, i.e., the external force F2, is applied to the energy absorber 10, particularly when the external force F2 is an external force that exceeds the reversible impact absorption range of the buffer part310.

Referring to FIG. 3, as the external force F2 is provided, the collision unit 400 moves in the direction in which the external force is provided, and is thus inserted into the inner space 140 of the external unit 100 by a certain stroke.

Here, as described above, the distance A1 between the fixing portion 320 and the end of the sub frame 430 is maintained substantially equal to the distance A2 between the collision surface 410 and the other end of the external unit 100.

As described above, when the collision unit 400 is slid and inserted, the buffer part310 receives the external force through the sub frame 430 and is compressed or contracted to an amount corresponding to the size of the external force F2.

However, at this time, the external force F2 provided is outside the reversible range of the buffer part310, and the buffer part310 does not recover from the compressed or contracted state, but maintains the compressed or contracted state.

In addition, in the case of the external force F2, since it is outside the reversible range of the buffer part310, the entire external force F2 is not absorbed through the buffer part310. Thus, as a result, the buffer unit 300, the external unit 100, and the collision unit 400 move as one unit to respond to the external force of a size that the buffer unit 310 cannot absorb, and this movement ultimately induces a relative movement with respect to the cutting unit 500.

As described above, as the external unit 100 moves relative to the cutting unit 500, the cutting portion 530 of the cutting unit 500 cuts the outer portion 110. By performing this cutting process, the external force of the size that the buffer part310 cannot absorb is also effectively absorbed.

However, in the case of such impact absorption, the buffer part310 irreversibly absorbs the impact, and furthermore, the cutting portion 530 has also performed a predetermined processing on the outer portion 110. Thus, even if the above external force F2 disappears, the buffer part310 does not return to its original state, and the cutting unit 500 also maintains the moved stroke as is.

After this, if an additional external force is applied, it may be difficult for the buffer part310 to absorb the additional external force, so the absorption of the additional external force is performed through cutting processing using the cutting unit 500.

As described above, when an irreversible range of external force is applied, a range exceeding the external force absorbed by the buffer part 310 may be effectively absorbed through the cutting process. In particular, since the cutting processing is performed in a state where a predetermined range of external force is primarily absorbed through the buffer part 310, the processing stroke of the outer portion 110 is reduced compared to a case where all external force is absorbed through the cutting processing. Accordingly, the range of external force absorption increases, and the durability and stability of the energy absorber 10 may be further improved.

Furthermore, when the external force of the irreversible range is applied, the horizontal frame 510 and the end portion 130 are extended and joined with a predetermined stepped portion. Thus, in addition to impact absorption through the above cutting process, additional impact absorption may be implemented in the slope portion 130c and the slope frame 510c.

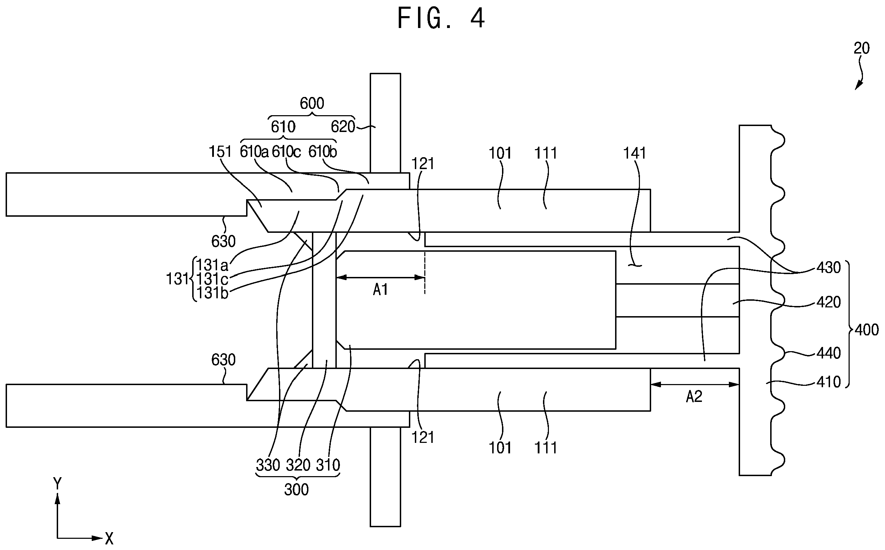

FIG. 4 is a cross-sectional view illustrating a tubular energy absorber according to another example embodiment of the present invention.

The energy absorber 20 according to the present example embodiment is substantially same as the energy absorber 10 of FIG. 1, except that an outer unit 101 performs the cut to a self-cut unit 600 and a cover unit 200 is omitted, and thus same reference numerals are used for the same elements and any repetitive explanation will be omitted.

Referring to FIG. 4, the energy absorber 20 according to the present example embodiment includes an outer unit 101, a buffer unit 300, a collision unit 400 and a self-cut unit 600.

Here, each of the buffer unit 300 and the collision unit 400 has the same structure as in the energy absorber 10 of FIG. 1.

The external unit 101 has a hollow cylindrical shape forming a predetermined inner space 141 and both sides along the first direction X are open.

The self-cut unit 600 is coupled to the outside of the external unit 101 and is coupled to the outside of the external unit 101 in a direction opposite to the direction in which the collision unit 400 is inserted.

The self-cut unit 600 is structured such that the impact is absorbed by cutting by the external unit 101 through relative movement with the external unit 101 according to the application of the external force.

The self-cut unit 600 includes a horizontal frame 610 and a vertical frame 620.

The horizontal frame 610 extends along the outer portion 111 of the external unit 101 and may have a hollow cylindrical shape as described above. Additionally, as illustrated, the outer portion 111 has a constant depth of cut and extends to be inserted into the inner side of the horizontal frame 610.

Here, the horizontal frame 610 and the outer portion 111 are extended so that only a certain area overlaps each other from the initial state. This is to form an area of a predetermined length or more as a cutting area in advance, since the self-cut unit 600 should perform cutting by the external unit 101 through sliding movement.

The outer portion 111 of the external unit 101 extends in the first direction X and extends to the end portion 131 at the portion where the self-cut unit 600 is coupled.

As illustrated, the end portion 131 extends in the first direction X and does not have the same thickness, but extends to form a stepped portion with variable thickness.

That is, the end portion 131 includes a second end portion 131b extending from the outer portion 111, a slope portion 131c extending in an inclined manner from the second end portion 131b, and a first end portion 131a additionally extending in the first direction X from the slope portion 131c.

At this time, the first end portion 131a may have a first thickness, and the second end portion 131b may have a second thickness larger than the first thickness. Accordingly, the end portion 131 extends from the outer portion 111 in the negative first direction -X while forming the stepped portion whose thickness decreases.

In addition, as illustrated, the slope portion 131c forms an inclined portion whose thickness gradually decreases as it extends in the negative first direction -X.

As described above, as the end portion 131 extends and includes the stepped portion forming a predetermined slope, the horizontal frame 610 that is coupled, i.e., adhered to the outer surface of the end portion 131 also extends and includes the stepped portion forming the slope.

That is, the horizontal frame 610 includes a first horizontal frame 610a coupled along the outer surface of the first end portion 131a, a second horizontal frame 610b coupled along the outer surface of the second end portion 131b, and a slope frame 610c coupled along the outer surface of the slope portion 131c.

At this time, the thickness of the first horizontal frame 610a may be greater than the thickness of the second horizontal frame 610b.

Thus, the horizontal frame 610 has a structure in which the inner surface extends to form a so-called stepped portion.

As described above, as the horizontal frame 610 and the end portion 131 are extended and joined with a predetermined stepped portion, additional impact absorption may be implemented in the slope portion 131c and the slope frame 610c when the impact is applied from the outside as described below.

The vertical frame 620 has a structure extending from the end of the horizontal frame 610 toward the second direction Y. The vertical frame 620 may have a circular plate structure with a predetermined thickness and an open center.

As described above, the self-cut unit 600 is positioned so as to cover the outside of the external unit 101 so as to overlap with it.

In the case of the external unit 101, a cutting part 151 is formed at the end (the end of the first end 131a) that overlaps with the self-cut unit 600. At this time, although not illustrated in detail, the cutting portion 151 may have a predetermined cutting tip attached to the end, thereby performing cutting processing on the horizontal frame 610.

That is, when the external impact is applied and the outer portion 111 moves relatively toward the horizontal frame 610, the cutting portion 151 performs cutting process on the inner surface of the horizontal frame 610, i.e., the self-cut portion 630, through the cutting tip portion. During this cutting process, the external impact is naturally absorbed.

In the present example embodiment, since the cutting portion 151 is formed on one side of the external unit 101 to perform cutting on the inner surface 630 of the horizontal frame 610, the cover unit 200 provided in the energy absorber 10 of FIG. 1 is omitted.

Hereinafter, the impact absorption state of the energy absorber 20 when the external impact, i.e. an external force, is applied is described.

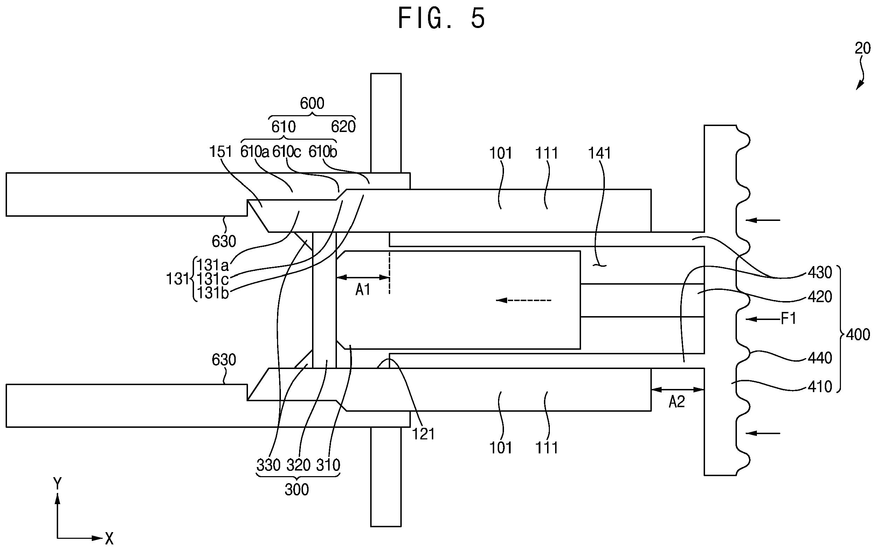

FIG. 5 is a cross-sectional view illustrating a reversible energy absorbing state when an external force is applied to the energy absorber of FIG. 4.

First, in FIG. 5, an energy absorption state is illustrated when the external impact, i.e., the external force F1, is applied to the energy absorber 20, particularly when the external force F1 is the external force within the reversible impact absorption range of the buffer part 310.

Referring to FIG. 5, as the external force F1 is provided, the collision unit 400 moves in the direction in which the external force is provided, and is thus inserted into the inner space 141 of the external unit 101 by a certain stroke.

Here, as described above, the distance A1 between the fixed portion 320 and the end of the sub frame 430 is maintained substantially the same as the distance A2 between the collision surface 410 and the other end of the external unit 101.

As described above, when the collision unit 400 is inserted while sliding, the buffer part 310 receives the external force through the sub frame 430 and is compressed or contracted to an amount corresponding to the size of the external force F1.

That is, the buffer part 310 is compressed or contracted to a degree corresponding to the size of the external force F1 and absorbs the external force.

Meanwhile, in the external force absorption state of the buffer unit 310, the external unit 101 and the self-cut unit 600 do not move relatively, and therefore, impact absorption through separate cutting may not occur. Of course, as explained above, even when the external force within the impact absorption range of the buffer unit 310 is applied due to a situation such as a momentary external force application, cutting may be performed on the self-cut unit 600.

Furthermore, the buffer part 310 in FIG. 5 is capable of reversible operation, and when the external force F1 disappears, the buffer part 310 that was contracted or compressed expands and returns to the initial state.

As described above, the buffer part 310 is capable of reversible operation for a predetermined range of external forces, absorbs the external force when it occurs, and returns to the initial state when the external force disappears, thereby performing repetitive and effective impact absorption for repetitive occurrence of the external forces.

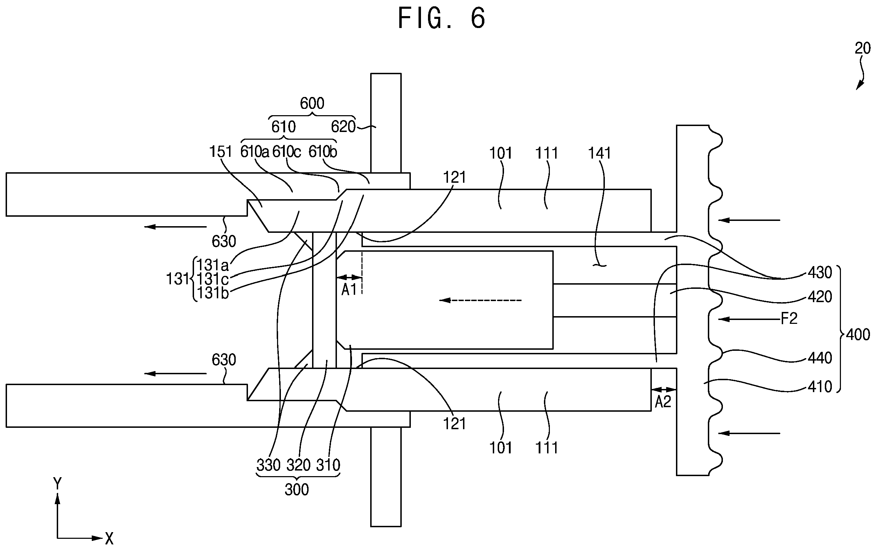

FIG. 6 is a cross-sectional view illustrating an energy absorbing state due to the cutting and the stepped portion when an external force is applied to the energy absorber of FIG. 4.

In FIG. 6, an energy absorption state is illustrated when the external impact, i.e., the external force F2, is applied to the energy absorber 20, particularly when the external force F2 is an external force that exceeds the reversible impact absorption range of the buffer part 310.

Referring to FIG. 6, as the external force F2 is provided, the collision unit 400 moves in the direction in which the external force is provided, and is thus inserted into the inner space 140 of the external unit 101 by a certain stroke.

Here, as described above, the distance A1 between the fixed portion 320 and the end of the sub frame 430 is maintained substantially the same as the distance A2 between the collision surface 410 and the other end of the external unit 101.

As described above, when the collision unit 400 is slid and inserted, the buffer part 310 receives the external force through the sub frame 430 and is compressed or contracted to an amount corresponding to the size of the external force F2.

However, here, the external force F2 provided is outside the reversible range of the buffer part 310, and the buffer part 310 does not recover from the compressed or contracted state, but maintains the compressed or contracted state.

In addition, in the case of the external force F2, since it is outside the reversible range of the buffer part 310, the entire external force F2 is not absorbed through the buffer part 310. Thus, as a result, the buffer unit 300, the external unit 101 and the impact unit 400 move as one unit to respond to the external force of a size that the buffer unit 310 cannot absorb, and this movement ultimately induces a relative movement with respect to the self-cut unit 600.

As described above, as the external unit 101 moves relative to the self-cut unit 600, the cutting part 151 of the external unit 101 cuts the self-cut portion 630 of the self-cut unit 600. By performing this cutting process, the external force of a size that the buffer part 310 cannot absorb is also effectively absorbed.

However, in the case of such impact absorption, the buffer part 310 irreversibly absorbs the impact, and furthermore, the cutting portion 151 has also performed a predetermined processing on the self-cut portion 630. Thus, even if the above external force F2 disappears, the buffer part 310 does not return to its original state, and the impact moved to the self-cut unit 600 is also maintained as is.

After this, if an additional external force is applied, it may be difficult for the buffer part 310 to absorb the additional external force, so the absorption of the additional external force is performed by cutting processing on the self-cut unit 600.

As described above, when an irreversible range of the external force is applied, a range exceeding the external force absorbed by the buffer part 310 may be effectively absorbed through the cutting process. In particular, since the cutting processing is performed in a state where a predetermined range of the external force is primarily absorbed through the buffer part 310, the processing stroke of the outer portion 111 is reduced compared to a case where all external force is absorbed through cutting processing. Thus, the range of the external force absorption increases, and the durability and stability of the energy absorber 20 may be further improved.

Furthermore, when the external force of the irreversible range is applied, as the horizontal frame 610 and the end portion 131 are extended and joined with the predetermined stepped portion, in addition to the impact being absorbed through the cutting process, additional impact absorption may be implemented in the slope portion 131c and the slope frame 610c.

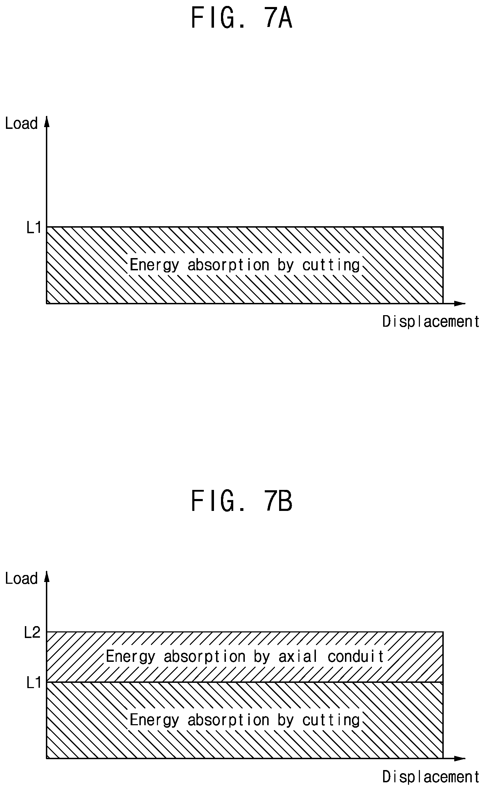

FIG. 7A is a graph showing an absorbing load in a state of absorbing the energy through the cutting, and FIG. 7B is a graph showing an absorbing load in a state of absorbing the energy through the cutting and the stepped portion, i.e. axial conduit.

As in FIG. 7A, when the external force is absorbed only through cutting, the absorbed load is only a relatively small load L1. In contrast, as in FIG. 7B, in addition to absorbing external force through cutting, when the external force is absorbed through the stepped portion formed by the slope portion and the slope frame as in the present example embodiment, a relatively large load L2 may be absorbed.

According to the present example embodiments, in the case of conventional tubular energy absorbers, cutting is performed at the same time as impact is provided, so they have an irreversible structure that makes it difficult to absorb additional impact. However, in the present example embodiment, when an impact is applied from the outside, energy can be reversibly absorbed through the buffer unit up to a preset level, allowing repeated impact absorption.

In addition, even when the above reversible energy absorption range is exceeded, sufficient impact absorption is possible through cutting. In particular, since cutting is performed after primary absorption by the buffer unit even when a relatively large impact is provided, the cutting stroke may be relatively minimized. Accordingly, stable and effective impact absorption may be achieved even for relatively large impacts.

In this case, since a so-called stepped portion is formed between the outer surface of the external unit and the inner surface of the cutting unit, in the process in which the above cutting unit cuts the outer portion of the above external unit, in addition to impact absorption by cutting force, impact absorption by stepped portion is additionally performed. Thus, it may achieve effective and stable absorption even for larger impacts.

In addition, by combining a cutting unit to the outside of the external unit, external impact may be absorbed by cutting the cutting unit through the cutting portion of the external unit. This structure may be selected by considering the situation or environment in which the energy absorption device is applied.

Furthermore, in this case as well, the stepped portion is formed on the inner surface of the cutting unit and the outer surface of the external unit, so that additional impact absorption through the stepped portion may be implemented along with cutting force.

Although the exemplary embodiments of the present invention have been described, it is understood that the present invention should not be limited to these exemplary embodiments but various changes and modifications can be made by one ordinary skilled in the art within the spirit and scope of the present invention as hereinafter claimed.

## Claims

1. An energy absorber comprising:
an external unit extending with forming a stepped portion, and forming a predetermined inner space;
a collision unit extending from the inner space to outside, and moving toward the inner space due to an external impact; and
a buffer unit disposed in the inner space, and connected to the collision unit to absorb the external impact,
wherein the external unit cuts or performs cutting and absorbs the external impact, as the collision unit moves.

2. The energy absorber of claim 1, wherein the buffer unit comprises:
a buffer part configured to absorb the external impact; and
a fixing portion configured to fix the buffer part to the external unit at an end of the buffer part.

3. The energy absorber of claim 2, wherein the buffer part is reversibly restored to an original state, when the impact within a predetermined range is applied.

4. The energy absorber of claim 2, wherein the collision unit comprises:
a collision surface to which the external impact is applied;
a central frame extending between the collision surface and the buffer part; and
a sub frame extending from the collision surface and extending toward the inner space along an inner surface of the external unit.

5. The energy absorber of claim 1, further comprising:
a cutting unit extending with forming a stepped portion and combined with an outer portion of the external unit to cut the external unit, when the external unit is cut to absorb the external impact.

6. The energy absorber of claim 5, wherein the cutting unit comprises:
a cutting portion disposed on the outer portion of the external unit, and cutting the outer portion along a direction toward the collision unit, when the external impact is applied.

7. The energy absorber of claim 6, wherein the cutting unit comprises:
a horizontal frame sliding on the outer portion; and
a vertical frame extending perpendicular to the outer portion from an end of the horizontal frame.

8. The energy absorber of claim 7, wherein the horizontal frame comprises:
a first horizontal frame extending with a first thickness;
a second horizontal frame extending with a second thickness larger than the first thickness; and
a slope frame extending with a slope between the first and second horizontal frames.

9. The energy absorber of claim 8, wherein the external unit comprises an end portion extending from the outer portion to be combined with the horizontal unit,
wherein the end portion comprises:
a first end portion making close contact with the first horizontal frame;
a second end portion making close contact with the second horizontal frame; and
a slope portion making close contact with the slope frame.

10. The energy absorber of claim 9, wherein the thickness of the first end portion is larger than the thickness of the second end portion.

11. The energy absorber of claim 1, further comprising:
a self-cut unit having a horizontal frame extending forming a stepped portion, and combined with the outer portion of the external unit to be cut by the external unit.

12. The energy absorber of claim 11, wherein the external unit comprises a cutting portion extending from an end portion located at an opposite end from a direction toward the collision unit,
wherein the cutting portion cuts an inner surface of the self-cut unit along a direction in which the external impact is provided, when the external impact is provided.

13. The energy absorber of claim 12, wherein the horizontal frame comprises:
a first horizontal frame extending with a first thickness;
a second horizontal frame extending with a second thickness smaller than the first thickness; and
a slope frame extending with a slope between the first and second horizontal frames.

14. The energy absorber of claim 13, wherein the end portion comprises:
a first end portion making close contact with the first horizontal frame;
a second end portion making close contact with the second horizontal frame; and
a slope portion making close contact with the slope frame.
